# FASCICULE DE BREVET EUROPEEN

(11) **EP 2 813 402 B1**
(45) Date de publication et mention de la délivrance du brevet: **24.04.2019**
(21) Numéro de dépôt: 14171315.6
(22) Date de dépôt: 05.06.2014
(51) Int. Cl.: B60S 1/38

(54) **Système d'essuyage permettant la projection d'un fluide de nettoyage et/ou de degivrage au niveau d'un balai d'essuie-glace**
Reinigungssystem, das das Spritzen von Reinigungs- und/oder Enteisungsflüssigkeit auf der Höhe des Scheibenwischerblatts ermöglicht
Wiping system enabling the spraying of a fluid for cleaning and/or de-icing at a windscreen-wiper blade

(30) Priorité: 14.06.2013 FR 1355555
(43) Date de publication de la demande: 17.12.2014
(73) Titulaire: Valeo Systèmes d'Essuyage, 78322 Le Mesnil Saint Denis (FR)
(72) Inventeur: Bousset, Xavier, 63115 MEZEL (FR); Thebault, Denis, 63000 Clermont Ferrand (FR)
(74) Mandataire: Callu-Danseux, Violaine

(56) Documents cités:
- EP-A1- 1 918 167
- WO-A1-2010/006775
- DE-A1-102007 062 304
- DE-A1-102008 021 457
- DE-A1-102009 017 990

## Description

La présente invention a pour objet un système d'essuyage permettant la projection d'un fluide de nettoyage et/ou de dégivrage au niveau d'au moins un balai d'essuie-glace.

Elle est destinée, notamment mais non exclusivement, à équiper les véhicules automobiles.

On sait que les systèmes d'essuyage permettant l'éjection directe du fluide de nettoyage et/ou de dégivrage au niveau d'un balai d'essuie-glace comportent généralement au moins un balai d'essuie-glace qui comprend au moins une rampe d'acheminement dudit fluide ; au moins un bras d'entraînement conformé de manière à pouvoir entraîner le balai d'essuie-glace sur une surface vitrée telle qu'une vitre ou un pare-brise, qui est relié au moyen d'un dispositif d'alimentation à une source en fluide de nettoyage et/ou de dégivrage ; des moyens de raccordement permettant de relier le dispositif d'alimentation à la rampe d'acheminement du fluide de nettoyage et/ou de dégivrage.

Un système d'essuyage de ce type est par exemple décrit dans la demande de brevet internationale publiée sous le numéro WO 2010/006775. Ce système d'essuyage comporte un balai d'essuie-glace articulé sur un bras d'actionnement par l'intermédiaire d'un adaptateur connecté d'une part audit bras et d'autre part à un connecteur hydraulique qui est lui-même connecté audit balai. Ce système d'essuyage comprend également un tuyau d'arrivée de fluide de nettoyage et/ou de dégivrage relié à un raccord d'entrée du connecteur hydraulique au moyen d'un élément de jonction rigide. Afin d'assurer le maintien en position de l'élément de jonction rigide, le bras peut comporter des moyens de blocage qui comprennent une découpe formée soit dans une des parois de l'adaptateur ou du bras soit dans une pièce rapportée audit adaptateur, ces moyens de blocage présentant une forme permettant à l'élément de jonction rigide de pouvoir se coincer en force dans cette découpe de manière temporaire.

Il s'avère toutefois que la connexion entre le tuyau d'arrivée de fluide et le balai s'effectue au niveau de l'adaptateur ou au niveau de la portion d'extrémité du bras qui présente sensiblement la forme d'une chape, ce qui ne permet pas un accès totalement libre à la connexion, le bras devant être pivoté ou démonté par rapport au balai lorsque l'on désire connecter ou déconnecter le tuyau d'arrivée au bras.

De plus, la réalisation d'une découpe spécifique du type susdit est contraignante industriellement car elle entraîne un surcoût, alors que l'utilisation d'une pièce rapportée nécessite de produire une pièce spécifique axée verticalement qui ne s'adapte qu'à une seule forme de bras d'entraînement.

En outre, l'élément de jonction rigide s'enfonce ou se coince en force dans la découpe ou dans la pièce rapportée en lui imprimant un mouvement de translation. Il s'avère toutefois que l'élément de jonction rigide n'est pas bloqué dans toutes les directions, ce dernier pouvant être éjecté de son logement dans le sens opposé à celui dudit mouvement de translation.

Le document DE 10 2008 021 457 A1 montre un système d'essuyage tel que décrit dans le préambule de la première revendication.

La présente invention a notamment pour objet de remédier à ces inconvénients majeurs en proposant un système d'essuyage permettant la projection d'un fluide de nettoyage et/ou de dégivrage au niveau d'au moins un balai d'essuie-glace, qui permet de connecter facilement le conduit d'arrivée du fluide au bras d'entraînement, sans qu'il soit nécessaire de déplacer ou démonter le bras par rapport au balai.

En outre, le système d'essuyage selon des variantes d'exécution de l'invention permet de connecter le conduit d'arrivée du fluide au bras d'entraînement d'une manière telle que :
- la rotation du balai par rapport au bras ne soit pas gênée ;
- le conduit d'arrivée soit bloqué dans toutes les directions ;
- le conduit d'arrivée du fluide puisse être connecté à des bras d'entraînement ayant des formes et des dimensions diverses.

A cet effet, elle propose un système d'essuyage comprenant :
- un bras d'entraînement comprenant une tige prolongée par une portion d'extrémité apte à être connectée à un balai d'essuie-glace ;
- un balai d'essuie-glace assemblé à ladite portion d'extrémité et comprenant au moins une rampe apte à canaliser un fluide de nettoyage et/ou de dégivrage ;
ledit système d'essuyage comprenant :
- un conduit de transport dudit fluide qui chemine au moins en partie le long de ladite tige, ledit conduit contribuant à canaliser ledit fluide vers ladite rampe ;
- un moyen de raccordement contribuant à assurer une connexion amovible entre ledit conduit et ladite rampe et contribuant à canaliser ledit fluide depuis ledit conduit vers ladite rampe ;
- un moyen de retenue apte à assurer une fixation dudit moyen de raccordement sur ladite tige.

Un tel moyen de retenue peut par exemple être réalisé sous la forme d'une ou plusieurs pièces rapportée(s) sur la tige, notamment par sertissage, collage, surmoulage ou soudure sur la tige, tel que par soudure ultra-sons, mais peut également venir de matière avec la tige. Le moyen de retenue peut donc être rendu alternativement démontable (amovible) ou non démontable de la tige.

De cette manière, le système d'essuyage permet d'assurer à la fois :
- le raccordement du conduit de transport du fluide à la rampe ; mais également
- la connexion du moyen de raccordement à la tige, à distance de ladite portion d'extrémité, ce qui permet avantageusement de procéder à ce raccordement et à cette connexion sans savoir à pivoter ou démonter le bras par rapport au balai.

En outre, le moyen de retenue permet avantageusement de connecter et de déconnecter ledit conduit de transport au bras d'entraînement sans qu'il soit nécessaire de réaliser une découpe spécifique dans le bras d'entraînement, destinée à coopérer avec une forme spécifique d'une pièce de raccord spécifique.

Avantageusement, le système d'essuyage selon l'invention est tel qu'il comprend en outre :
- un dispositif de connexion pour assembler avec articulation le balai d'essuie-glace audit bras d'entraînement au niveau de ladite portion d'extrémité.

Plus préférablement, le système d'essuyage selon l'invention est tel que ledit dispositif de connexion comprend un connecteur fixé audit balai, ledit système d'essuyage comprenant un conduit d'entrée dudit fluide dans ledit connecteur, ledit conduit d'entrée étant apte à canaliser ledit fluide depuis ledit moyen de raccordement vers ledit connecteur.

Plus préférablement encore, le système d'essuyage selon l'invention est tel que ladite fixation dudit moyen de raccordement sur ladite tige est amovible.

Avantageusement, ladite portion d'extrémité présente une face supérieure dont la longueur est inférieure à la distance séparant d'une part, une paroi de l'adaptateur qui est sensiblement perpendiculaire à ladite face supérieure et contre laquelle paroi de l'adaptateur ladite portion d'extrémité est au contact lorsque cette dernière est assemblée au balai d'essuie-glace, et séparant d'autre part une extrémité libre du conduit d'entrée sur laquelle est raccordée le moyen de raccordement. De cette façon, on décale le point de connexion entre le conduit de transport et le conduit d'entrée du fluide à distance du dispositif de connexion, et l'on facile ainsi les opérations d'assemblage et de désassemblage.

Selon une variante d'exécution de l'invention, le moyen de retenue comporte :
- un moyen de liaison apte à pouvoir coopérer avec ladite tige pour assurer une fixation, dite première fixation, dudit moyen de retenue sur ledit bras d'entraînement ; et
- un moyen de fixation apte à assurer une fixation, dite deuxième fixation, dudit moyen de raccordement sur ledit moyen de retenue et ledit moyen de fixation comprenant une portion qui s'étend, en position d'utilisation, sensiblement en regard d'une portion de la tige à laquelle est connecté ledit moyen de liaison.

Avantageusement, le système d'essuyage selon l'invention est tel que ledit moyen de fixation est apte à assurer une fixation amovible dudit moyen de raccordement sur ledit moyen de retenue. Autrement dit, ladite deuxième fixation est amovible.

Selon une autre variante d'exécution de l'invention, ledit moyen de fixation est apte à assurer ladite deuxième fixation amovible par encliquetage dudit moyen de raccordement sur ledit moyen de retenue.

Selon une variante d'exécution de l'invention, ledit moyen de fixation est apte à permettre le blocage du moyen de raccordement dans toutes les directions.

De cette façon, le conduit de transport est bloqué dans toutes les directions.

Selon une autre variante d'exécution de l'invention, ledit moyen de retenue est conformé de manière à définir un espace intérieur comprenant :
- un premier logement apte à recevoir une portion de la tige ;
- un second logement formant ledit moyen de fixation.

Préférentiellement, le premier logement et le second logement sont disposés l'un par rapport à l'autre de façon à ce qu'en une position connectée du moyen de retenue sur la tige, une portion de la tige contribue à maintenir ledit moyen de raccordement dans le second logement.

Ainsi, le système d'essuyage permet d'assurer un blocage du moyen de raccordement dans toutes les directions.

Selon une variante d'exécution de l'invention, ledit moyen de liaison comprend des parois délimitant une fente au niveau de laquelle le premier logement débouche, ladite fente étant apte à permettre l'introduction d'une portion de la tige dans ledit moyen de retenue.

Selon une autre variante d'exécution de l'invention, le moyen de liaison comporte une base prolongée successivement à chacune de ses extrémités par une paroi comprenant :
- une première partie s'étendant transversalement par rapport à ladite base ;
- une seconde partie venant en retour ;
lesdites deux secondes parties délimitant ladite fente, ledit moyen de liaison étant symétrique par rapport à l'axe médian et transversal de ladite base.

Selon une autre variante d'exécution de l'invention, le moyen de fixation comporte deux saillies s'étendant depuis ladite base dans l'espace intérieur du moyen de retenue, l'espacement entre deux saillies permettant de disposer dans cet espacement ledit moyen de raccordement.

Selon une autre variante d'exécution de l'invention, le moyen de retenue est réalisé en une matière ou un ensemble de matières lui permettant de se déformer élastiquement.

Les capacités de déformation élastique du moyen de retenue permettent avantageusement au moyen de retenue de pouvoir être connecté et déconnecté à des bras d'entraînement ayant des dimensions diverses, la fente pouvant par exemple s'élargir au moment de l'introduction du bras d'entraînement puis se rétracter lorsque la tige de ce bras d'entraînement figure intégralement dans ledit premier logement. En outre, l'élasticité du moyen de liaison permet d'enserrer une portion de la tige du bras d'entraînement sans entraîner de cisaillements.

Préférentiellement, le moyen de retenue est réalisé par moulage.

Selon une variante d'exécution de l'invention, le moyen de retenue est apte à être mobile en translation par rapport à une portion de la tige lorsqu'il est connecté à la tige.

Selon une autre variante, le système d'essuyage selon l'invention est tel qu'il comprend un moyen de blocage en position du moyen de retenue sur la tige selon au moins une direction d'extension longitudinale de ladite tige. Préférentiellement, le moyen de blocage mentionné ci-dessus est tel qu'il permet de bloquer tout mouvement du moyen de retenue par rapport à ladite tige.

Ce moyen de blocage en position du moyen de retenue sur la tige est par exemple réalisé par une forme et une contre-forme situées respectivement sur le moyen de retenue et sur la tige.

D'autres caractéristiques et avantages de la présente invention apparaîtront à la lumière des exemples qui vont suivre et des figures ci-annexées, lesdits exemples et figures étant donnés à titre illustratif et nullement limitatif.
La figure 1A est une représentation schématique d'un système d'essuyage selon l'invention qui comporte un balai d'essuie-glace articulé sur un bras d'actionnement, avec une mise en évidence du moyen de retenue permettant notamment de relier le conduit de transport du fluide audit bras.
La figure 1B est une représentation schématique du système d'essuyage selon l'invention représenté sur la figure 1A, sur laquelle le bras et le balai sont en position désassemblée.
La figure 2 est une représentation schématique du moyen de retenue et du moyen de raccordement représentés sur les figures 1A et 1B, en position assemblée et en position désassemblée.
La figure 3A est une représentation schématique, selon une coupe transversale, du moyen de raccordement et du moyen de retenue représentés sur la figure 2, avec une mise en évidence des mouvements qu'il convient d'imprimer pour permettre l'assemblage avec le bras.
La figure 3B est une représentation schématique, selon une coupe transversale, du moyen de raccordement et du moyen de liaison représentés sur la figure 2, en position assemblée sur le bras.

Pour des raisons de clarté, seuls les éléments essentiels pour la compréhension de l'invention ont été représentés de manière schématique, et ceci sans respect de l'échelle.

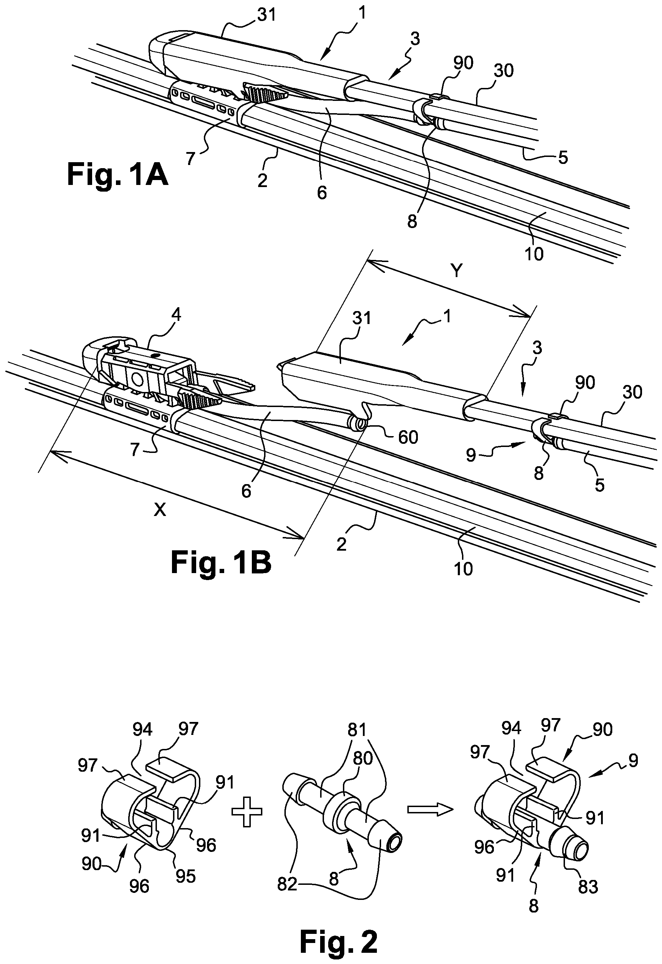

Tel que cela est représenté sur les figures 1A et 1B, le système d'essuyage 1 selon l'invention comporte :
- un balai d'essuie-glace 2 comportant au moins une rampe 10 d'acheminement et de distribution d'un fluide de nettoyage et/ou de dégivrage ;
- un bras d'entraînement 3 apte à entraîner le balai d'essuie-glace 2 sur une surface vitrée, le bras d'entraînement 3 comprenant une tige 30 prolongée par une portion d'extrémité 31 apte à être connectée au balai 2 ;
- un adaptateur 4 pour assembler avec articulation le balai d'essuie-glace 2 audit bras d'entraînement 3 au niveau de ladite portion d'extrémité 31 ;
- un conduit de transport 5 pour l'écoulement d'un fluide, apte à être relié à une source (non représentée) en fluide de nettoyage et/ou de dégivrage, ce conduit 5 présentant en l'espèce la forme d'un conduit d'arrivée.

Ladite rampe 10 comprend au moins un orifice d'arrosage (non représenté) sous pression qui permet de distribuer, préférentiellement par pulvérisation, ledit fluide sur la surface vitrée. De manière préférentielle, lesdits orifices d'arrosage débouchent sur au moins l'un des bords longitudinaux et latéraux du balai d'essuie-glace 2.

Dans cet exemple, ladite rampe 10 est reliée à l'une de ses extrémités, directement ou indirectement, à un conduit d'entrée 6 présentant en l'espèce une forme sensiblement tubulaire de façon à former une canule. Ce conduit d'entrée 6 s'étend du côté opposé à celui où est disposée la lame d'essuyage du balai 2, dans l'espace séparant le bras d'entraînement 3 du balai d'essuie-glace 2, lorsque le bras d'entraînement 3 et le balai 2 sont assemblés.

Le conduit d'entrée 6 est préférentiellement réalisé en une matière lui conférant des propriétés de flexibilité, telle qu'une matière plastique, afin de faciliter les manipulations de l'utilisateur lorsque ce dernier procède par exemple au changement du balai d'essuie-glace 2.

La rampe 10 d'acheminement et de distribution est généralement reliée de manière indirecte audit conduit d'entrée 6 par l'intermédiaire d'un connecteur 7 qui comprend au moins un raccord de sortie et un raccord d'entrée (non représentés) aptes à permettre respectivement la connexion à la rampe 10 et au conduit d'entrée 6.

Avantageusement, ladite portion d'extrémité 31 présente une face supérieure dont la longueur Y est inférieure à la distance X séparant d'une part, une paroi de l'adaptateur 4 qui est sensiblement perpendiculaire à ladite face supérieure et contre laquelle paroi de l'adaptateur ladite portion d'extrémité 31 est au contact lorsque cette dernière est assemblée au balai d'essuie-glace 2, et d'autre part une extrémité libre du conduit d'entrée 6 sur laquelle est raccordée le moyen de raccordement 8. De cette façon, on décale le point de connexion entre le conduit de transport 5 et le conduit d'entrée 6 du fluide à distance du dispositif de connexion 4, 7, et l'on facile ainsi les opérations d'assemblage et de désassemblage.

Le système d'essuyage 1 selon l'invention comprend également un moyen de raccordement 8 apte à raccorder directement ou indirectement ledit conduit de transport 5 à ladite rampe 10.

Dans l'exemple représenté sur les figures 1A et 1B, ce raccordement est réalisé de manière indirecte, le moyen de raccordement 8 étant connecté à la rampe 10 par l'intermédiaire du conduit d'entrée 6 et du connecteur 7.

Tel que cela est notamment représenté sur la figure 2, ledit moyen de raccordement 8 présente une forme sensiblement tubulaire, et comprend deux extrémités 82 conformées de manière à pouvoir coopérer respectivement avec les extrémités du conduit d'entrée 6 et du conduit d'arrivée 5 qui constitue dans cet exemple le conduit de transport 5. Les extrémités 82 du moyen de raccordement 8 ainsi que les extrémités libres du conduit d'entrée 6 et du conduit d'arrivée 5 sont ainsi aptes à permettre une fixation amovible entre ces pièces 5, 6, 8. A titre d'exemple, tel que cela est notamment représenté sur la figure 2, les extrémités du moyen de raccordement 8 peuvent comprendre un filetage 83 apte à coopérer avec des orifices taraudés 60 figurant aux extrémités des conduits d'arrivée 5 et d'entrée 6.

Selon une variante d'exécution de l'invention, chacune des extrémités 82 de ce moyen de raccordement 8 peut présenter sensiblement la forme d'un tronc de cône droit, orienté de telle façon que les petites bases soient directement en regard des extrémités des conduits d'arrivée 5 et d'entrée 6 lors de la connexion. Les extrémités 82 du moyen de raccordement 8 présentent des dimensions leur permettant d'être partiellement enfoncées dans lesdites extrémités des conduits d'arrivée 5 et d'entrée 6.

Préférentiellement, ledit moyen de raccordement 8 est rigide et comporte un clapet anti-retour (non représenté) permettant d'éviter le reflux du fluide de nettoyage et/ou de dégivrage vers ladite source du fluide.

Un moyen de retenue 9 est apte à assurer une fixation amovible du moyen de raccordement 8 sur une portion de la tige 30, à distance de ladite portion d'extrémité 31.

Selon une variante d'exécution de l'invention, le moyen de retenue 9 comporte un moyen de liaison 90 apte à pouvoir coopérer avec ladite portion de tige 30 pour assurer une fixation, dite première fixation, amovible dudit moyen de retenue 9 sur ledit bras d'entraînement 3, ainsi qu'un moyen de fixation 91 apte à assurer une fixation, dite deuxième fixation, amovible du moyen de raccordement 8 sur le moyen de retenue 9.

Préférentiellement, le moyen de fixation 91 est disposé de manière à permettre à la portion dudit moyen de raccordement 8 coopérant avec le moyen de fixation 91 de s'étendre, en position d'utilisation, sensiblement en regard de la tige 30 à laquelle est connecté le moyen de liaison 90.

Tel que cela est représenté sur les figures 2 à 3B, dans cet exemple, le moyen de retenue 9 est conformé de manière à définir un espace intérieur comprenant :
- un premier logement 92 apte à recevoir une portion de la tige 30 ;
- un second logement 93 formant ledit moyen de fixation 91.

Préférentiellement le premier logement 92 et le second logement 93 sont disposés l'un par rapport à l'autre de façon à ce qu'en position connectée du moyen de retenue 9 sur la portion de la tige 30, ladite portion de la tige 30 contribue à maintenir le moyen de raccordement 8 dans le second logement 93, en empêchant l'expulsion du moyen de raccordement 8 de ce second logement 93 dans au moins une direction.

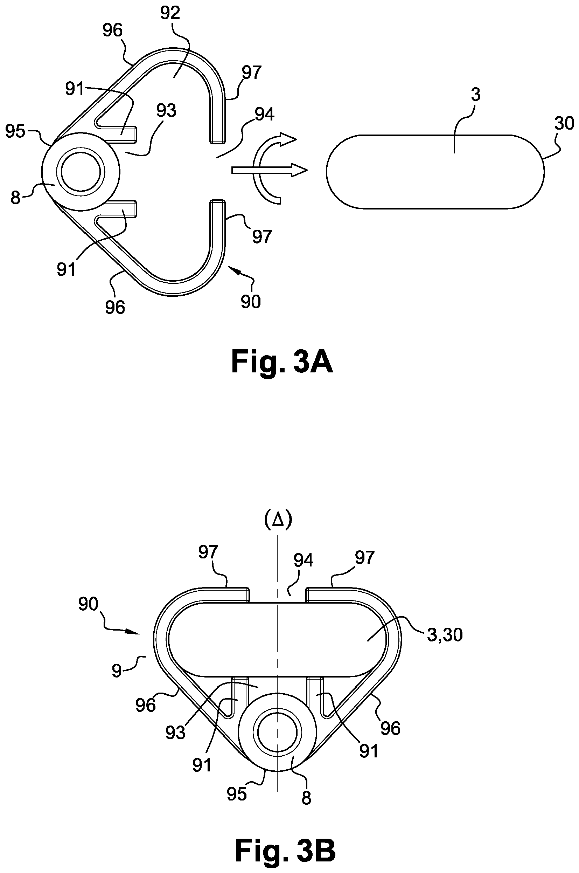

Tel que cela est représenté notamment sur la figure 3B, ledit moyen de liaison 90 présente en l'espèce sensiblement la forme d'une agrafe. Le moyen de liaison 90 comprend des parois délimitant une fente 94 au niveau de laquelle le premier logement 93 débouche, ladite fente 94 étant apte à permettre l'introduction d'une portion de la tige 30. Le moyen de liaison 90 comporte une base 95 prolongée successivement à chacune de ses extrémités par une paroi comprenant :
- une première partie 96 s'étendant transversalement par rapport à ladite base 95 ;
- une seconde partie 97 venant en retour ;
l'espacement entre les deux secondes parties 97 délimitant ladite fente 94, le moyen de liaison 90 étant symétrique par rapport à l'axe médian et transversal (Δ) de ladite base 95. Lesdites secondes parties 97 délimitent le premier logement 92.

De plus, le moyen de retenue 9 est préférentiellement réalisé en une matière ou un ensemble de matières lui permettant de se déformer de façon non permanente. Ainsi, à titre d'exemple, le moyen de retenue 9 peut être réalisé à partir d'une matière polymère ayant une limite d'élasticité qui permet de satisfaire à cette contrainte, le choix de cette matière polymère relevant des compétences générales de l'homme du métier. De cette façon, les capacités de déformation élastique du moyen de retenue 9 lui permettent avantageusement de pouvoir être connecté et déconnecté à des bras d'entraînement 3 ayant des dimensions diverses. Les parties du moyen de liaison 90 au contact du bras d'entraînement 3 peuvent ainsi se déformer et modifier les dimensions notamment du premier logement 92 et de ladite fente 94, ce qui facilite l'introduction du bras d'entraînement 3 dans ces espaces. En outre, ces propriétés de déformation élastique peuvent permettre au moyen de liaison 90 d'enserrer une partie substantielle de la portion de la tige 30 du bras d'entraînement 3 à laquelle le moyen de retenue 9 est au contact après connexion, ce qui optimise avantageusement le maintien du moyen de retenue 9.

Préférentiellement, ledit moyen de fixation 91 est apte à assurer la deuxième fixation amovible par encliquetage du moyen de raccordement 8 sur le moyen de retenue 9.

Préférentiellement, le moyen de fixation 91 présente une conformité de forme avec le moyen de raccordement 8 afin de permettre cette connexion par encliquetage.

Ainsi, en l'espèce, tel que cela est notamment représenté sur les figures 3A et 3B, le moyen de fixation 91 comporte deux saillies axées longitudinalement, s'étendant depuis ladite base 95 dans l'espace intérieur du moyen de retenue 9, l'espacement entre les deux saillies 91 permettant d'y disposer le moyen de raccordement 8. Ces deux saillies 91 s'étendent préférentiellement de part et d'autre dudit axe de symétrie (Δ).

Préférentiellement, les saillies 91 sont réalisées en une matière ou un ensemble de matières leur permettant de se déformer de façon non permanente, ce qui facilite la connexion par encliquetage entre le moyen de raccordement 8 et les saillies 91.

Avantageusement, tel que cela est représenté notamment sur la figure 3B, les saillies 91 présentent préférentiellement une hauteur permettant au bras d'entraînement 3 de prendre appui sur l'un de leurs côtés après qu'il ait été introduit dans le premier logement 92, ce qui permet avantageusement de maintenir le moyen de raccordement 8 dans ledit espacement et de le bloquer dans toutes les directions.

Selon une variante d'exécution de l'invention, et tel que cela est représenté sur la figure 2, le moyen de raccordement 8 peut comporter un collet 80 qui présente deux faces opposées desquelles s'étendent respectivement une conduite 81 terminée par une extrémité 82 présentant un filetage 83. Dans ce cas, l'espacement entre deux saillies 91 est sensiblement égal au diamètre du moyen de raccordement 8 au niveau dudit collet 80 afin de permettre la connexion par encliquetage.

Selon une variante d'exécution de l'invention, le moyen de retenue 9 est apte à être mobile en translation par rapport à la portion de la tige 30 lorsqu'il est connecté à cette dernière, ce mouvement de translation étant rendu possible grâce aux dimensions du premier logement 92 et/ou aux propriétés élastiques du moyen de retenue 9.

La connexion au bras d'entraînement 3 du conduit de transport 5 est réalisée en effectuant :
- l'encliquetage du moyen de raccordement 8 sur le moyen de retenue 9 ;
- la mise en place du moyen de retenue 9 de manière à ce que ladite fente 94 soit alignée avec le bord de la tige 30 du bras d'entraînement 3 ayant la plus petite des dimensions ;
- la réalisation d'un mouvement de translation imprimé au moyen de retenue 9 de façon à introduire la portion de la tige 30 du bras d'entraînement 3 dans ledit premier logement 92 par l'intermédiaire de ladite fente 94 ;
- la réalisation d'un mouvement de rotation imprimé au moyen de retenue 9 de manière à ce que l'intégralité de la portion de la tige 30 du bras d'entraînement 3 sur laquelle le moyen de retenue 9 est directement au contact après connexion, soit introduite dans le premier logement 92 ; dans l'exemple représenté sur les figures 1 à 3B, un mouvement de rotation d'un angle sensiblement égal à 90° est imprimé au moyen de retenue 9.

La déconnexion du conduit de transport 5 du bras d'entraînement 3 s'effectue en réalisant ces étapes dans le sens inverse.

Il est à noter que des variantes de réalisation sont bien sûr possibles et que la présente invention ne se limite pas à l'exemple détaillé ci-dessus. Notamment, il est possible d'étendre la présente invention à un système d'essuyage dans lequel ledit moyen de raccordement 8 serait formé directement sur ledit conduit d'entrée 6.

## Revendications

1. Système d'essuyage (1) comprenant :
- un bras d'entraînement (3) comprenant une tige (30) prolongée par une portion d'extrémité (31) apte à être connectée à un balai d'essuie-glace (2) ;
- un balai d'essuie-glace (2) assemblé à ladite portion d'extrémité (31) et comprenant au moins une rampe (10) apte à canaliser un fluide de nettoyage et/ou de dégivrage ;
- un conduit de transport (5) dudit fluide qui chemine au moins en partie le long de ladite tige (30), ledit conduit (5) contribuant à canaliser ledit fluide vers ladite rampe (10), ledit système d'essuyage étant **caractérisé en ce qu'**il comprend:
- un moyen de raccordement (8) contribuant à assurer une connexion amovible entre ledit conduit (5) et ladite rampe (10) et à canaliser ledit fluide depuis ledit conduit (5) vers ladite rampe (10) ; et
- un moyen de retenue (9) apte à assurer une fixation dudit moyen de raccordement (8) sur ladite tige (30).

2. Système d'essuyage (1) selon la revendication 1 comprenant en outre :
- un dispositif de connexion (4, 7) pour assembler avec articulation le balai d'essuie-glace (2) audit bras d'entraînement (3) au niveau de ladite portion d'extrémité (31).

3. Système d'essuyage (1) selon la revendication 2, dans lequel ledit dispositif de connexion (4, 7) comprend un connecteur (7) fixé audit balai (2), ledit système d'essuyage (1) comprenant un conduit d'entrée (6) dudit fluide dans ledit connecteur (7), ledit conduit d'entrée (6) étant apte à canaliser ledit fluide depuis ledit moyen de raccordement (8) vers ledit connecteur (7).

4. Système d'essuyage (1) selon l'une quelconque des revendications 1 à 3, dans lequel ladite fixation dudit moyen de raccordement (8) sur ladite tige (30) est amovible.

5. Système d'essuyage (1) selon l'une quelconque des revendications 1 à 4, dans lequel ledit moyen de retenue (9) comporte :
- un moyen de liaison (90) apte à pouvoir coopérer avec ladite tige (30) pour assurer une fixation, dite première fixation, dudit moyen de retenue (9) sur ledit bras d'entraînement (3) ; et
- un moyen de fixation (91) apte à assurer une fixation, dite deuxième fixation, dudit moyen de raccordement (8) sur ledit moyen de retenue (9) et ledit moyen de fixation (91) comprenant une portion qui s'étend, en position d'utilisation, sensiblement en regard d'une portion de la tige (30) à laquelle est connecté ledit moyen de liaison (90).

6. Système d'essuyage (1) selon la revendication 5, dans lequel ledit moyen de fixation (91) est apte à assurer une fixation amovible dudit moyen de raccordement (8) sur ledit moyen de retenue (9).

7. Système d'essuyage (1) selon la revendication 6,
dans lequel ledit moyen de fixation (91) est apte à assurer ladite deuxième fixation amovible par encliquetage dudit moyen de raccordement (8) sur ledit moyen de retenue (9).

8. Système d'essuyage (1) selon l'une quelconque des revendications 5 à 7,
dans lequel ledit moyen de fixation (91) est apte à permettre le blocage du moyen de raccordement (8) dans toutes les directions.

9. Système d'essuyage (1) selon l'une quelconque des revendications 5 à 8,
dans lequel ledit moyen de retenue (9) est conformé de manière à définir un espace intérieur (92, 93) comprenant :
- un premier logement (92) apte à recevoir une portion de la tige (30) ;
- un second logement (93) formant ledit moyen de fixation (91).

10. Système d'essuyage (1) selon la revendication 9,
dans lequel le premier logement (92) et le second logement (93) sont disposés l'un par rapport à l'autre de façon à ce qu'en une position connectée du moyen de retenue (9) sur la tige (30), une portion de la tige (30) contribue à maintenir ledit moyen de raccordement (8) dans le second logement (93).

11. Système d'essuyage (1) selon l'une quelconque des revendications 9 et 10,
dans lequel ledit moyen de liaison (90) comprend des parois délimitant une fente (94) au niveau de laquelle le premier logement (92) débouche, ladite fente (94) étant apte à permettre l'introduction d'une portion de la tige (30) dans ledit moyen de retenue (9).

12. Système d'essuyage (1) selon la revendication 11,
dans lequel ledit moyen de liaison (90) comporte une base (95) prolongée successivement à chacune de ses extrémités par une paroi comprenant :
- une première partie (96) s'étendant transversalement par rapport à ladite base (95) ;
- une seconde partie (97) venant en retour ;
lesdites deux secondes parties (97) délimitant ladite fente (94), ledit moyen de liaison (90) étant symétrique par rapport à l'axe médian et transversal (Δ) de ladite base (95).

13. Système d'essuyage (1) selon la revendication 12,
dans lequel ledit moyen de fixation (91) comporte deux saillies (91) s'étendant depuis ladite base (95) dans l'espace intérieur (92, 93) du moyen de retenue (9), l'espacement entre deux saillies (91) permettant de disposer dans cet espacement ledit moyen de raccordement (8).

14. Système d'essuyage (1) selon l'une quelconque des revendications précédentes,
dans lequel ledit moyen de retenue (9) est réalisé en une matière ou un ensemble de matières lui permettant de se déformer élastiquement.

15. Système d'essuyage (1) selon l'une quelconque des revendications précédentes,
dans lequel ledit moyen de retenue (9) est réalisé par moulage.

16. Système d'essuyage (1) selon l'une quelconque des revendications précédentes,
dans lequel ledit moyen de retenue (9) est apte à être mobile en translation par rapport à une portion de la tige (30) lorsqu'il est connecté à la tige (30).

17. Système d'essuyage (1) selon l'une quelconque des revendications 1 à 15,
comprenant un moyen de blocage en position du moyen de retenue (9) sur la tige (30) selon au moins une direction d'extension longitudinale de ladite tige (30).

## Patentansprüche

1. Reinigungssystem (1), das Folgendes umfasst:
- einen Antriebsarm (3), der einen Schaft (30) umfasst, der von einem Endabschnitt (31) verlängert ist, der geeignet ist, um mit einem Scheibenwischerblatt (2) verbunden zu sein;
- ein Scheibenwischerblatt (2), das mit dem Endabschnitt (31) zusammengefügt ist und mindestens eine Rampe (10) umfasst, die geeignet ist, um ein Reinigungs- und/oder Enteisungsfluid zu kanalisieren;
- eine Transportleitung (5) des Fluids, die mindestens zum Teil entlang des Schafts (30) läuft, wobei die Leitung (5) zum Kanalisieren des Fluids zu der Rampe (10) beiträgt, Reinigungssystem **dadurch gekennzeichnet, dass** es Folgendes umfasst:
- ein Anschlussmittel (8), das zum Sicherstellen einer abnehmbaren Verbindung zwischen der Leitung (5) und der Rampe (10) und zum Kanalisieren des Fluids von der Leitung (5) zu der Rampe (10) beiträgt; und
- eine Rückhaltemittel (9), das geeignet ist, um eine Befestigung des Anschlussmittels (8) auf dem Schaft (30) sicherzustellen.

2. Reinigungssystem (1) nach Anspruch 1, das außerdem Folgendes umfasst:
- eine Verbindungsvorrichtung (4, 7), um das Scheibenwischerblatt (2) gelenkig mit dem Antriebsarm (3) im Bereich des Endabschnitts (31) zusammenzufügen.

3. Reinigungssystem (1) nach Anspruch 2, wobei die Verbindungsvorrichtung (4, 7) einen Steckverbinder (7) umfasst, der an dem Blatt (2) befestigt ist, wobei das Reinigungssystem (1) eine Eingangsleitung (6) des Fluids in den Steckverbinder (7) umfasst, wobei die Eingangsleitung (6) geeignet ist, um das Fluid von dem Anschlussmittel (8) zu dem Steckverbinder (7) zu kanalisieren.

4. Reinigungssystem (1) nach einem der Ansprüche 1 bis 3, wobei die Befestigung des Anschlussmittels (8) auf dem Schaft (30) abnehmbar ist.

5. Reinigungssystem (1) nach einem der Ansprüche 1 bis 4, wobei das Rückhaltemittel (9) Folgendes umfasst:
- ein Verbindungsmittel (90), das geeignet ist, um mit dem Schaft (30) zusammenzuwirken, um eine Befestigung, erste Befestigung genannt, des Rückhaltemittels (9) auf dem Antriebsarm (3) sicherzustellen; und
- ein Befestigungsmittel (91), das geeignet ist, um eine Befestigung, zweite Befestigung genannt, des Anschlussmittels (8) auf dem Rückhaltemittel (9) sicherzustellen, und wobei das Befestigungsmittel (91) einen Abschnitt umfasst, der sich in Gebrauchsposition im Wesentlichen gegenüber einem Abschnitt des Schafts (30), mit dem das Verbindungsmittel (90) verbunden ist, erstreckt.

6. Reinigungssystem (1) nach Anspruch 5, wobei das Befestigungsmittel (91) geeignet ist, um eine abnehmbare Befestigung des Anschlussmittels (8) auf dem Rückhaltemittel (9) sicherzustellen.

7. Reinigungssystem (1) nach Anspruch 6,
wobei das Befestigungsmittel (91) geeignet ist, um die zweite abnehmbare Befestigung durch Einrasten des Anschlussmittels (8) auf dem Rückhaltemittel (9) sicherzustellen.

8. Reinigungssystem (1) nach einem der Ansprüche 5 bis 7,
wobei das Befestigungsmittel (91) geeignet ist, das Blockieren des Anschlussmittels (8) in alle Richtungen zu erlauben.

9. Reinigungssystem (1) nach einem der Ansprüche 5 bis 8,
wobei das Rückhaltemittel (9) derart ausgestaltet ist, dass es einen Innenraum (92, 93) definiert, der Folgendes umfasst:
- eine erste Aufnahme (92), die geeignet ist, um einen Abschnitt des Schafts (30) aufzunehmen;
- eine zweite Aufnahme (93), die das Befestigungsmittel (91) bildet.

10. Reinigungssystem (1) nach Anspruch 9,
wobei die erste Aufnahme (92) und die zweite Aufnahme (93) zueinander derart angeordnet sind,
dass in einer verbundenen Position des Rückhaltemittels (9) auf dem Schaft (30) ein Abschnitt des Schafts (30) dazu beiträgt, das Anschlussmittel (8) in der zweiten Aufnahme (93) zu halten.

11. Reinigungssystem (1) nach einem der Ansprüche 9 und 10,
wobei das Verbindungsmittel (90) Wände umfasst, die einen Schlitz (94) abgrenzen, in dessen Bereich die erste Aufnahme (92) mündet, wobei der Schlitz (94) geeignet ist, das Einführen eines Abschnitts des Schafts (30) in das Rückhaltemittel (9) zu erlauben.

12. Reinigungssystem (1) nach Anspruch 11,
wobei das Verbindungsmittel (90) eine Basis (95) umfasst, die sukzessive an jedem ihrer Enden durch eine Wand verlängert ist, die Folgendes umfasst:
- einen ersten Teil (96), der sich quer zu der Basis (95) erstreckt;
- einen zweiten Teil (97), der einen Rücklauf bildet;
wobei die zweiten Teile (97) den Schlitz (94) abgrenzen, wobei das Verbindungsmittel (90) bezüglich der Mittenachse symmetrisch und bezüglich der Basis (95) quer (Δ) ist.

13. Reinigungssystem (1) nach Anspruch 12,
wobei das Befestigungsmittel (91) zwei Vorsprünge (91) umfasst, die sich von der Basis (95) in den Innenraum (92, 93) des Rückhaltemittels (9) erstrecken, wobei es die Beabstandung zwischen zwei Vorsprüngen (91) erlaubt, in diesem Raum das Anschlussmittel (8) anzuordnen.

14. Reinigungssystem (1) nach einem der vorstehenden Ansprüche,
wobei das Rückhaltemittel (9) aus einem Material oder einer Einheit von Materialien hergestellt ist, die es ihm erlaubt, sich elastisch zu verformen.

15. Reinigungssystem (1) nach einem der vorstehenden Ansprüche,
wobei das Rückhaltemittel (9) durch Formen hergestellt ist.

16. Reinigungssystem (1) nach einem der vorstehenden Ansprüche,
wobei das Rückhaltemittel (9) geeignet ist, in Verschiebung bezüglich eines Abschnitts des Schafts (30) beweglich zu sein, wenn es mit dem Schaft (30) verbunden ist.

17. Reinigungssystem (1) nach einem der Ansprüche 1 bis 15,
das ein Mittel zum Blockieren in Position des Rückhaltemittels (9) auf dem Schaft (30) entlang mindestens einer Längserstreckungsrichtung des Schafts (30) umfasst.

## Claims

1. Wiper system (1) comprising:
- a driving arm (3) comprising a rod (30) extended by an end portion (31) that is able to be connected to a windscreen wiper (2);
- a windscreen wiper (2) fitted on said end portion (31) and comprising at least one ramp (10) that is able to channel a cleaning and/or deicing fluid;
- a transporting pipe (5) for said fluid, which passes at least in part along said rod (30), said pipe (5) helping to channel said fluid towards said ramp (10), said wiper system being **characterized in that** it comprises :
- a connecting means (8) that helps to provide a removable connection between said pipe (5) and said ramp (10) and to channel said fluid from said pipe (5) towards said ramp (10);and
- a retaining means (9) that is able to ensure fastening of said connecting means (8) to said rod (30).

2. Wiper system (1) according to Claim 1, also comprising:
- a connection device (4, 7) for fitting the windscreen wiper (2) in an articulated manner on said driving arm (3) in the region of said end portion (31).

3. Wiper system (1) according to Claim 2,
wherein said connection device (4, 7) comprises a connector (7) fixed to said wiper (2), said wiper system (1) comprising an inlet pipe (6) for admitting said fluid into said connector (7), said inlet pipe (6) being able to channel said fluid from said connecting means (8) towards said connector (7).

4. Wiper system (1) according to any one of Claims 1 to 3,
wherein said fastening of said connecting means (8) to said rod (30) is removable.

5. Wiper system (1) according to any one of Claims 1 to 4, wherein said retaining means (9) has:
- a linking means (90) that is able to engage with said rod (30) in order to ensure fastening, known as first fastening, of said retaining means (9) to said driving arm (3); and
- a fastening means (91) that is able to ensure fastening, known as second fastening, of said connecting means (8) to said retaining means (9), said fastening means (91) comprising a portion which extends, in the use position, substantially opposite a portion of the rod (30) to which said linking means (90) is connected.

6. Wiper system (1) according to Claim 5,
wherein said fastening means (91) is able to ensure removable fastening of said connecting means (8) to said retaining means (9).

7. Wiper system (1) according to Claim 6,
wherein said fastening means (91) is able to ensure said second removable fastening by snap-fastening of said connecting means (8) to said retaining means (9).

8. Wiper system (1) according to any one of Claims 5 to 7, wherein said fastening means (91) is able to block the connecting means (8) in all directions.

9. Wiper system (1) according to any one of Claims 5 to 8, wherein said retaining means (9) is shaped so as to define an internal space (92, 93) comprising:
- a first housing (92) that is able to receive a portion of the rod (30);
- a second housing (93) that forms said fastening means (91).

10. Wiper system (1) according to Claim 9,
wherein the first housing (92) and the second housing (93) are disposed with respect to one another such that when the retaining means (9) is in a position connected to the rod (30), a portion of the rod (30) helps to keep said connecting means (8) in the second housing (93).

11. Wiper system (1) according to either of Claims 9 and 10,
wherein said linking means (90) comprises walls that delimit a slot (94) at which the first housing (92) opens out, said slot (94) being able to allow the introduction of a portion of the rod (30) into said retaining means (9).

12. Wiper system (1) according to Claim 11,
wherein said linking means (90) has a base (95) which is successively extended at each of its ends by a wall comprising:
- a first part (96) that extends transversely with respect to said base (95);
- a second, turned-back part (97);
said two second parts (97) delimiting said slot (94), said linking means (90) being symmetrical with respect to the median transverse axis (Δ) of said base (95).

13. Wiper system (1) according to Claim 12,
wherein said fastening means (91) has two projections (91) that extend from said base (95) into the internal space (92, 93) of the retaining means (9), the gap between two projections (91) making it possible to dispose said connecting means (8) in this gap.

14. Wiper system (1) according to any one of the preceding claims, wherein said retaining means (9) is produced from a material or group of materials that allow(s) it to deform elastically.

15. Wiper system (1) according to any one of the preceding claims, wherein said retaining means (9) is produced by moulding.

16. Wiper system (1) according to any one of the preceding claims, wherein said retaining means (9) is able to move in translation with respect to a portion of the rod (30) when it is connected to the rod (30).

17. Wiper system (1) according to any one of Claims 1 to 15, comprising a means for blocking the retaining means (9) in position on the rod (30) in at least one longitudinal direction of extension of said rod (30).
